# EUROPEAN PATENT SPECIFICATION

(11) **EP 3 971 228 B1**
(45) Date of publication and mention of the grant of the patent: **27.09.2023**
(21) Application number: 20804772.0
(22) Date of filing: 13.05.2020
(51) Int. Cl.: C08G 69/26, C08K 5/053, C08K 5/092, C08L 77/00, C08L 77/06, C08K 7/06, C08K 7/14

(54) **POLYAMIDE RESIN COMPOSITION**
POLYAMIDHARZZUSAMMENSETZUNG
COMPOSITION DE RÉSINE POLYAMIDE

(30) Priority: 16.05.2019 JP 2019092511
(43) Date of publication of application: 23.03.2022
(73) Proprietor: Unitika Ltd., Osaka-shi Osaka 541-8566 (JP)
(72) Inventor: YAGI, Yusuke, Uji-shi, Kyoto 611-0021 (JP); TAKUBO, Yuki, Uji-shi, Kyoto 611-0021 (JP); MASAKI, Tatsunori, Uji-shi, Kyoto 611-0021 (JP)
(74) Representative: Vigand, Philippe
(86) International application number: PCT/JP2020/019059
(87) International publication number: WO 2020/230805

(56) References cited:
- WO-A1-2015/125886
- JP-A- 2000 345 031
- JP-A- 2016 153 459
- JP-A- 2016 514 751
- JP-A- 2018 517 833
- US-A1- 2015 329 744
- US-A1- 2016 177 094

## Description

### Technical Field

The present invention relates to a polyamide resin composition.

### Background Art

Polyamide resins are excellent in heat resistance and mechanical properties, and thus are widely used as a material for molding. Among others, polyamides that has a high melting point are used in applications that particularly highly demand heat resistance, such as parts around an engine of an automobile and LED lighting.

It is generally known that a polyamide that has a higher melting point has poorer flowability in melt processing, and that a polyamide is also likely to cause deterioration in physical properties (thermal aging) in a high temperature environment.

Patent Literatures 1 to 3 disclose that the thermal aging of an aliphatic polyamide or a semi-aromatic polyamide is suppressed by adding a polyalcohol thereto, and show that the thermal aging is effectively suppressed when the temperature of the atmosphere is roughly more than 200°C.

However, the suppressing effect of the additive on the thermal aging disclosed in these literatures is temperature-dependent, and accordingly, the effect may be small when the temperature of the atmosphere is 200°C or less.

Patent Literature 4 discloses a technique for suppressing the thermal aging of a semi-aromatic polyamide, which may suppress insufficiently the thermal aging at 200°C.

As described above, any technique for suppressing the thermal aging of polyamides in an atmosphere at a relatively low temperature, specifically at about 180 to 200°C, has not been established.

### Citation List

### Patent Literature

Patent Literature 1: JP 2011-529991A
Patent Literature 2: JP 2013-538927A
Patent Literature 3: JP 2017-106038A
Patent Literature 4: WO 2015/159834

Further, US 2016/177094 A1 discloses a filled polyamide composition comprising, based on the total weight of the composition :
- from 35 to 80% wt of at least one polyhydric alcohol-modified polyamide, said polyhydric alcohol-modified polyamide comprising an amount of at least 0.1% wt, based on the total weight of the polyhydric alcohol-modified polyamide, of polyhydric alcohol residues chemically bonded at least to a part of the polyhydric alcohol-modified polyamide, wherein said polyhydric alcohol PHA is an organic compound containing three or more hydroxyl groups in the molecule;
- from 10 to 65% wt of at least one filler;
- from 1 to 10% wt of at least one impact modifying rubber; and
- from 0.01 to 3% wt of at least one copper-containing stabilizer.

### Summary of Invention

### Technical Problem

The present invention aims to solve the above-described problem, and an object of the present invention is to provide a polyamide resin composition of which thermal aging is highly suppressed in an atmosphere at a temperature of about 180 to 200°C.

### Solution to Problem

As a result of earnest studies to solve the problem descried above, the present inventors have found that the problem can be solved in a resin composition including a polyamide, a polyalcohol, and an aromatic polycarboxylic acid by adjusting the contents of these components within respective specific ranges and, at the same time, adjusting the total amount of the carboxyl group of the polyamide and the aromatic polycarboxylic acid within a specific range, and thus have reached the present invention. Specifically, the summary of the present invention is as follows.

A polyamide resin composition of the present invention includes 100 parts by mass of a semi-aromatic polyamide (A), 3.0 to 10.0 parts by mass of a polyalcohol (B), and more than 0.0 parts by mass and 4.0 parts by mass or less of an aromatic polycarboxylic acid (C), wherein the total amount of a carboxyl group of (A) and (C) is 80 to 600 mmol per 1 kg in total of (A), (B), and (C) and the aromatic polycarboxylic acid (C) is an aromatic tricarboxylic acid represented by general formula (1): 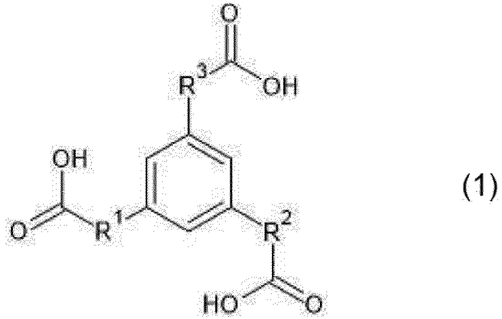 wherein R¹, R², and R³ each independently represent a single bond or a divalent group selected from a methylene group, an ethylene group, a propylene group, a butylene group, a cyclohexylene group, and a phenylene group.

In the polyamide resin composition of the present invention, the content of the aromatic polycarboxylic acid (C) is preferably 0.4 parts by mass or more per 100 parts by mass of the semi-aromatic polyamide (A).

In the polyamide resin composition of the present invention, the semi-aromatic polyamide (A) preferably has a melting point of 270 to 350°C.

In the polyamide resin composition of the present invention, the polyalcohol (B) is preferably dipentaerythritol or a derivative thereof.

In the polyamide resin composition of the present invention, the aromatic polycarboxylic acid (C) is preferably 1,3,5-benzenetricarboxylic acid.

The polyamide resin composition of the present invention preferably has a retention of tensile strength at 180°C after 1000 hours of 90% or more and a retention of tensile strength at 200°C after 1000 hours of 90% or more, both in an air atmosphere.

The polyamide resin composition of the present invention preferably further includes 5 to 200 parts by mass of a fibrous reinforcing material (D).

In the polyamide resin composition of the present invention, the fibrous reinforcing material (D) is preferably a glass fiber and/or a carbon fiber.

The present invention also relates to a molded article obtained by molding the polyamide resin composition of the present invention, wherein the total amount of a carboxyl group of (A) and (C) is 65 to 500 mmol per 1 kg in total of (A), (B), and (C).

### Advantageous Effects of Invention

The present invention can provide a polyamide resin composition of which thermal aging is highly suppressed in an atmosphere at a temperature of about 180 to 200°C and which thus has no concern about deterioration of physical properties in an environment in such a temperature zone.

### Description of Embodiments

The present invention will be described in detail below.

The polyamide resin composition of the present invention includes 100 parts by mass of a semi-aromatic polyamide (A), 3.0 to 10.0 parts by mass of a polyalcohol (B), and more than 0.0 parts by mass and 4.0 parts by mass or less of an aromatic polycarboxylic acid (C).

The polyamide (A) in the present invention includes a dicarboxylic acid component and a diamine component. The polyamide (A) may include a copolymerized component. However, it is preferable that the polyamide (A) should not be a copolymer, i.e., should be composed of a single dicarboxylic acid component and a single diamine component, in view of having excellent heat resistance, mechanical strength, and chemical resistance and showing high crystallization speed to obtain a molded article using a mold at a low temperature.

Examples of the dicarboxylic acid component composing the polyamide (A) include an aromatic dicarboxylic acid such as terephthalic acid, isophthalic acid and derivatives thereof, and naphthalenedicarboxylic acid and derivatives thereof, and an aliphatic dicarboxylic acid such as adipic acid, sebacic acid, azelaic acid, and dodecanedioic acid. Among these, terephthalic acid is preferable in view of improving heat resistance.

Examples of an acid component copolymerized when the dicarboxylic acid component is terephthalic acid include a dicarboxylic acid including an aliphatic dicarboxylic acid such as oxalic acid, malonic acid, succinic acid, glutaric acid, adipic acid, pimelli acid, suberic acid, azelaic acid, sebacic acid, undecanedioic acid, and dodecanedioic acid, and an alicyclic dicarboxylic acid such as cyclohexanedicarboxylic acid. In view of not decreasing the melting point and heat resistance of the polyamide (A), the amount of the aromatic dicarboxylic acid other than terephthalic acid, the aliphatic dicarboxylic acid and the alicyclic dicarboxylic acid, as the copolymerized component, is preferably 5 mol% or less based on the total number of moles of the starting monomers, and more preferably, none of these are substantially included.

Examples of the diamine component composing the polyamide (A) include an aliphatic diamine such as 1,2-ethanediamine, 1,3-propanediamine, 1,4-butanediamine, 1,5-pentanediamine, 1,6-hexanediamine, 1,7-heptanediamine, 1,8-octanediamine, 1,9-nonandiamine, 1,10-decanediamine, 1,11-undecanediamine, 1,12-dodecanediamine, 2-methyl-1,5-pentanediamine, and 2-methyl-1,8-octanediamine.

Examples of the diamine component copolymerized other than the aliphatic diamine include an alicyclic diamine having 6 to 20 carbon atoms such as cyclohexanediamine and an aromatic diamine having 6 to 20 carbon atoms such as xylylenediamine and benzenediamine. In view of not impairing the properties brought about by the aliphatic diamine described above, the amount of the alicyclic diamine and the aromatic diamine copolymerized, which are not the aliphatic diamine, is preferably 5 mol% or less based on the total number of moles of the starting monomers, and more preferably, none of these are substantially included.

The polyamide (A) in the present invention preferably has a melting point of 270 to 350°C, as described hereinafter, and the polyamide (A) is a semi-aromatic polyamide. Examples of the semi-aromatic polyamide include Polyamide 4T, Polyamide 6T, Polyamide 8T, Polyamide 9T, Polyamide 10T, Polyamide 11T, Polyamide 12T, and copolymers thereof. Furthermore, the polyamide such as Polyamide 4T, Polyamide 6T, Polyamide 9T, Polyamide 10T, and copolymers thereof are more preferable in view of having low water absorbency, excellent heat resistance and particularly excellent reflow resistance, and among these, Polyamide 10T and copolymers thereof are particularly preferable in view of having good balance between heat resistance and mechanical properties and also having excellent chemical resistance. As the polyamide (A), these polyamides may be used singly, or a mixture of two or more of the polyamides may be used.

In the present invention, examples of a copolymerized component composing the polyamide (A) other than the above include a lactam such as caprolactam and laurolactam, ω-aminocarboxylic acids such as aminocaproic acid and 11-aminoundecanoic acid. In view of not impairing heat resistance, mechanical properties or chemical resistance of the polyamide (A), the amount of these copolymerized components is preferably 5 mol% or less based on the total number of moles of the starting monomers, and more preferably, none of these are substantially included.

As described above, the polyamide (A) in the present invention is preferably composed of a single aromatic dicarboxylic acid component and a single aliphatic diamine component. However, the polyamide resin composition of the present invention may include two or more polyamides different in constitutional monomer components, as the polyamide (A).

In the present invention, the polyamide (A) may include a monocarboxylic acid component as a constitutional component in order to enhance the flowability and the demoldability. The content of the monocarboxylic acid component is preferably 0.0 to 4.0 mol%, more preferably 0.0 to 3.0 mol%, and even more preferably 0.0 to 2.5 mol%, based on the all monomer components composing the polyamide (A) .

The molecular weight of the monocarboxylic acid is preferably 140 or more, and more preferably 170 or more. When the molecular weight of the monocarboxylic acid is 140 or more, the flowability and the demoldability of the polyamide (A) are improved, and furthermore, the improved flowability in melt processing enables a lower processing temperature to thereby suppress thermal degradation in the melt processing, which results in that a molded article to be obtained has improved resistance against thermal aging. In addition, when the resin composition includes a polyamide (A) that includes a monocarboxylic acid component having a molecular weight of 140 or more in combination with the polyalcohol (B), a molded article to be obtained has an increased degree of crystallinity without any change in the crystallization speed in the molding. As a result, the molded article has synergistically improved chemical resistance. In the art of automobiles, chemical resistance is required of molded articles, such as parts that is brought into contact with an antifreezing solution, and molded articles thus having an increased degree of crystallinity are useful particularly in such an application.

Examples of the monocarboxylic acid component include an aliphatic monocarboxylic acid, an alicyclic monocarboxylic acid, and an aromatic monocarboxylic acid, and the aliphatic monocarboxylic acid is preferable in view of flowability and demoldability.

Examples of the aliphatic monocarboxylic acid having a molecular weight of 140 or more include caprylic acid, nonanoic acid, decanoic acid, lauric acid, myristic acid, palmitic acid, stearic acid, and behenic acid. Among these, stearic acid is preferable in view of the high versatility.

Examples of the alicyclic monocarboxylic acid having a molecular weight of 140 or more include 4-ethylcyclohexanecarboxylic acid, 4-hexylcyclohexanecarboxylic acid, and 4-laurylcyclohexanecarboxylic acid.

Examples of the aromatic monocarboxylic acid having a molecular weight of 140 or more include 4-ethyl benzoic acid, 4-hexyl benzoic acid, 4-lauryl benzoic acid, alkyl benzoic acids, 1-naphthoic acid, 2-naphthoic acid, and derivatives thereof.

The monocarboxylic acid components may be used singly or in combination. A monocarboxylic acid having a molecular weight of 140 or more and a monocarboxylic acid having a molecular weight less than 140 may be used in combination. In the present invention, the molecular weight of the monocarboxylic acid refers to the molecular weight of the monocarboxylic acid as a starting material.

In the present invention, the polyamide (A) preferably has a melting point of 270 to 350°C, more preferably 300 to 350°C, even more preferably 305 to 340°C, and particularly preferably 310 to 335°C. If the polyamide (A) has a melting point less than 270°C, the polyamide resin composition to be obtained has insufficient crystallinity and may thus have poor resistance to thermal aging. On the other hand, if the polyamide (A) has a melting point more than 350°C, carbonization and decomposition may progress in melt processing since the decomposition temperature of the polyamide bonds is about 350°C. In the present invention, the melting point means the temperature at the top of an endothermic peak as measured with a differential scanning calorimeter (DSC) when increasing the temperature at a rate of temperature increase of 20°C/min.

In the present invention, the polyamide (A) preferably has a relative viscosity of 1.8 or more as measured at a concentration of 1 g/dL in 96% sulfuric acid at 25°C, in view of mechanical properties, and the relative viscosity is more preferably 1.8 to 3.5, and even more preferably 2.2 to 3.1. If the polyamide (A) has a relative viscosity of 3.5 or more, melt processing may be difficult.

The method for producing the polyamide (A) is not particularly limited, and any of conventionally known methods such as a thermal polymerization method and a solution polymerization method can be used. Among these, the thermal polymerization method is preferably used in view of industrial advantageousness.

Examples of the method for producing a semi-aromatic polyamide by the thermal polymerization method include a method including the step (i) of producing a reacting product between an aromatic dicarboxylic acid component and an aliphatic diamine component and the step (ii) of polymerizing the resulting product.

As the step (i), the following method may be carried out, for example: an aromatic dicarboxylic acid powder is heated in advance to a temperature equal to or more than the melting point of an aliphatic diamine and equal to or less than the melting point of the aromatic dicarboxylic acid, and the aliphatic diamine is added to the aromatic dicarboxylic acid powder at that temperature while maintaining the powder form of the aromatic dicarboxylic acid and allowing substantially no water to be contained. Alternatively, the following different method may be carried out, for example: a suspension including an aliphatic diamine in a melted state and a solid aromatic dicarboxylic acid are mixed by stirring to obtain a mixed liquid, and then, a reaction between the aromatic dicarboxylic acid and the aliphatic diamine, which is a salt-producing reaction, and a low polymer-producing reaction by polymerization of the produced salt are carried out at a temperature less than the melting point of a semi-aromatic polyamide to be finally produced to thereby obtain a mixture of the salt and the low polymer. In this case, pulverization may be carried out while causing the reactions, or the reaction product may be once taken out after the reactions and then pulverized. The former is preferred for the step (i) in view of ease of controlling the shape of the reaction product.

As the step (ii), the following method may be carried out, for example: the reaction product obtained in the step (i) is subjected to solid phase polymerization at a temperature less than the melting point of a semi-aromatic polyamide to be finally produced to thereby polymerize to a specific molecular weight to obtain the semi-aromatic polyamide. The solid phase polymerization is preferably carried out in a flow of an inert gas such as nitrogen at a polymerization temperature of 180 to 270°C for a reaction time of 0.5 to 10 hours.

The reactor for the step (i) and that for the step (ii) are not particularly limited, and any of known reactors may be used. The steps (i) and (ii) may be carried out in the same reactor or in different reactors.

Examples of the method for heating in the thermal polymerization method include, but not limited to, a method involving heating a reaction vessel with a medium such as water, steam, or a heat transfer oil; a method involving heating a reaction vessel with an electric heater; and a method involving utilizing friction heat due to a movement of the content, such as heat generated by stirring. These methods may be used in combination.

In the production of the polyamide (A), a polymerization catalyst may be used in order to increase the polymerization efficiency. Examples the polymerization catalyst include phosphoric acid, phosphorous acid, hypophosphorous acid, and salts thereof. Generally, the amount of the polymerization catalyst added is preferably 2 mol% or less based on the all monomer components to compose the polyamide (A).

The polyamide resin composition of the present invention includes 3.0 to 10.0 parts by mass of the polyalcohol (B) per 100 parts by mass of the semi-aromatic polyamide (A).

The polyalcohol (B) in the present invention refers to a compound containing two or more hydroxyl groups. The polyalcohol (B) may be a saturated aliphatic compound, an unsaturated aliphatic compound, an alicyclic compound, an aromatic compound, or a saccharide. The polyalcohol may contain one or more heteroatoms, for example, oxygen, nitrogen and/or sulfur. The polyalcohol (B) may contain a substituent other than the hydroxyl group, such as an ether group, a carboxylic group, an amide, or an ester group. The polyalcohol may be a low molecular weight compound or a high molecular weight compound of polymer type, which includes a certain repeating monomer unit. These compounds as the polyalcohol (B) may be used singly or in combinations of two or more thereof.

The polyamide resin composition of the present invention, which includes the polyalcohol (B), has improved resistance to thermal aging. In addition, since the polyamide resin composition of the present invention includes the polyalcohol (B), the polyamide resin composition has improved flowability, which enables melt processing at a lower temperature, and thus thermal degradation in the melt processing can be suppressed.

Examples of the saturated aliphatic compound include a low molecular weight dihydric alcohol, such as ethylene glycol, diethylene glycol, triethylene glycol, 1,4-butanediol, 1,5-pentanediol, 2,2-dimethyl-1,3-propanediol, and glycerin monomethacrylate; a low molecular weight trihydric alcohol, such as glycerol, trimethylolpropane, hexane-1,2,6-triol, 1,1,1-tris-(hydroxymethyl) ethane, 3-(2'-hydroxyethoxy)-propane-1,2-diol, 3-(2'-hydroxypropoxy)-propane-1,2-diol, 2-(2'-hydroxyethoxy)-hexane-1,2-diol, 6-(2'-hydroxypropoxy)-hexane-1,2-diol, 1,1,1-tris-[(2'-hydroxyethoxy)-methyl]-ethane, 1,1,1-tris-[(2'-hydroxypropoxy)-methyl]-propane, ditrimethylolpropane, trimethylolpropane ethoxylate, and trimethylolpropane propoxylate; a low molecular weight tetra- or higher-hydric alcohol, such as pentaerythritol, dipentaerythritol, and tripentaerythritol; and high molecular weight polyalcohols, such as polyethylene glycol, polyglycerin, polyvinyl alcohol, ethylene-vinyl alcohol copolymer resin, polyvinyl butyral (e.g., Mowital, manufactured by Kuraray Co., Ltd.), hydrogenated polybutadiene having hydroxyl groups at both terminals (e.g., GI series, manufactured by Nippon Soda Co., Ltd.), polybutadiene having hydroxyl groups at both terminals (e.g., G series, manufactured by Nippon Soda Co., Ltd.), dendritic polyalcohol (e.g., Boltorn, manufactured by Perstorp Holding AB), and polycaprolactone polyol (e.g., Placcel 200 series, 300 series, and 400 series, manufactured by DAICEL CORPORATION).

Examples of the unsaturated aliphatic compound include ricinoleyl alcohol.

Examples of the alicylic compound include 1,2-cyclohexanediol, 1,3-cyclohexanediol, 1,4-cyclohexanediol, 1,3,5-cyclohexanetriol, and 2,3-di- (2'-hydroxyethyl) - cyclohexane-1-ol.

Examples of the aromatic compound include 1,2-benzenedimethanol, 1,3-benzenedimethanol, 1,4-benzenedimethanol, hydrobenzoin, 1,1,2,2-tetraphenylethane-1,2-diol, 1,1,1-tris-(4'-hydroxyphenyl)-ethane, 1,1,1-tris-(hydroxyphenyl)-propane, 1,1,3-tris-(dihydroxy-3-methylphenyl) -propane, 1,1,4-tris-(dihydroxyphenyl)-butane, 1,1,5-tris-(hydroxyphenyl)-3-methylpentane, and bisphenoxyethanol fluorene.

Examples of the saccharide include cyclodextrin, D-mannose, glucose, galactose, sucrose, fructose, xylose, arabinose, D-mannitol, D-sorbitol, D- or L-arabitol, xylitol, iditol, galactitol, talitol, allitol, altritol, guilitol, erythritol, threitol, ribitol, and D-gulonic acid-γ-lactone.

Examples of the polyalcohol having two or more hydroxyl groups and also an ester group as another substituent include a polyalcohol that has been esterified with a fatty acid so as to leave two or more hydroxyl groups, such as an ester between pentaerythritol and a fatty acid (e.g., UNISTAR H series, manufactured by NOF CORPORATION), and an ester between dipentaerythritol and dibasic acid (PLENLIZER series, manufactured by Ajinomoto Fine-Techno Co., Inc.).

The content of the polyalcohol (B) is 3.0 to 10.0 parts by mass, preferably 3.0 to 9.0 parts by mass, more preferably 3.0 to 8.0 parts by mass, and particularly preferably 5.0 to 8.0 parts by mass, per 100 parts by mass of the polyamide (A). If the content of the polyalcohol (B) is less than 3.0 parts by mass, the resin composition fails to exhibit the suppressing effect on the thermal aging. On the other hand, if the content of the polyalcohol (B) is more than 10 parts by mass, the suppressing effect on the thermal aging is saturated so that any more effect is not expected to be exhibited. In addition, the polyalcohol may be vaporized from such a resin composition in melt processing to generate a large amount of gas or result in poor residence stability. Furthermore, a molded article to be obtained may have a damaged appearance or insufficient mechanical properties due to bleeding-out of the polyalcohol on the surface.

The polyamide resin composition of the present invention includes more than 0.0 parts by mass and 4.0 parts by mass or less of an aromatic polycarboxylic acid (C) per 100 parts by mass of the semi-aromatic polyamide (A).

In the present invention, the aromatic polycarboxylic acid (C) is a compound having a plurality of carboxyl groups in one molecule. In accordance with the present disclosure, an aromatic polycarboxylic acid may be a hydrate or an anhydride, and may be a low molecular weight compound or a high molecular weight compound of polymer type, which includes a certain repeating monomer unit. These compounds as the aromatic polycarboxylic acid (C) may be used singly or in combinations of two or more thereof.

The polyamide resin composition of the present invention, which includes the aromatic polycarboxylic acid (C), has improved resistance to thermal aging.

According to the present disclosure, examples of the aromatic polycarboxylic acid (C) include phthalic acid, isophthalic acid, terephthalic acid, 1,2-naphthalenedicarboxylic acid, 1,4-naphthalenedicarboxylic acid, 1,8-naphthalenedicarboxylic acid, 2,3-naphthalenedicarboxylic acid, 2,6-naphthalenedicarboxylic acid, 9,10-anthracendicarboxylic acid, 4,4'-benzophenonedicarboxylic acid, 2,2'-biphenyldicarboxylic acid, 3,3'-biphenyldicarboxylic acid, 4,4'-biphenyldicarboxylic acid, 3,3'-biphenyletherdicarboxylic acid, 4,4'-biphenyletherdicarboxylic acid, 4,4'-binaphthyldicarboxylic acid, hemimeric acid, trimellitic acid, 1,3,5-benzenetricarboxylic acid (trimesic acid), 1,3,5-tris(carboxymethyl)benzene, 1,3,5-tris(4-carboxyphenyl)benzene, 1,2,4-naphthalentricarboxylic acid, 2,5,7-naphthalentricarboxylic acid, merophanic acid, pranitoic acid, pyromellitic acid, 3,3',4,4'-benzophenonetetracarboxylic acid, 2,2',3,3'-benzophenone tetracarboxylic acid, 2,3,3',4'-benzophenone tetracarboxylic acid, 3,3',4,4'-biphenyltetracarboxylic acid, 2,2',3,3'-biphenyltetracarboxylic acid, 2,3,3',4'-biphenyltetracarboxylic acid, 4,4'-oxydiphthalic acid, 3,3',4,4'-diphenylmethanetetracarboxylic acid, 1,4,5,8-naphthalenetetracarboxylic acids, 1,2,5,6-naphthalenetetracarboxylic acids, 2,3,6,7-naphthalenetetracarboxylic acids, and anthracene tetracarboxylic acids. Examples of the heterocyclic polycarboxylic acid include tris(2-carboxyethyl)isocyanurate, and tris(3-carboxypropyl)isocyanurate.

When the aromatic polycarboxylic acid (C) has carboxylic acids in the 1,3,5-positions on the benzene ring, the aromatic polycarboxylic acid can suppress gelation due to crosslinking, and accordingly, in accordance with the present invention, the aromatic polycarboxylic acid (C) is an aromatic tricarboxylic acid represented by the general formula (1): 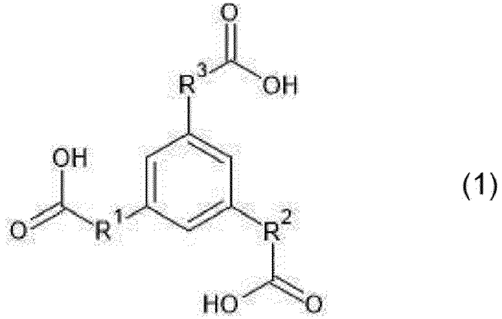 wherein R¹, R², and R³ each independently represent a single bond or a divalent group selected from a methylene group, an ethylene group, a propylene group, a butylene group, a cyclohexylene group, and a phenylene group. The divalent group may be straight or branched. Among the aromatic tricarboxylic acids represented by the general formula (1), 1,3,5-benzene tricarboxylic acid, 1,3,5-tris(carboxymethyl)benzene, and 1,3,5-tris(4-carboxyphenyl)benzene are preferable, and 1,3,5-benzene tricarboxylic acid is more preferable.

The content of the aromatic polycarboxylic acid (C) is essentially more than 0.0 parts by mass and 4.0 parts by mass or less, , more preferably 0.4 parts by mass or more, even more preferably 0.4 to 3.0 parts by mass, particularly preferably 0.4 to 2.0 parts by mass, per 100 parts by mass of the polyamide (A). If the content of the aromatic polycarboxylic acid (C) is more than 4.0 parts by mass, the suppressing effect on the thermal aging is saturated in the resin composition so that any more effect is not expected to be exhibited, and the resin composition may also have insufficient mechanical properties.

In the polyamide resin composition of the present invention, the total amount of the carboxyl group of the polyamide (A) and the aromatic polycarboxylic acid (C) is 80 to 600 mmol, preferably 80 to 400 mmol, and more preferably 90 to 400 mmol, per 1 kg in total of the polyamide (A), the polyalcohol (B), and the aromatic polycarboxylic acid (C). If the total amount of the carboxyl group of (A) and (C) is less than 80 mmol per 1 kg in total of (A), (B), and (C), the effect of suppressing the thermal aging of the resin composition is not exhibited, and if it is more than 600 mmol, the resin composition may have insufficient mechanical strength due to bleeding-out of the polycarboxylic acid on the surface.

A molded article obtained by molding the polyamide resin composition of the present invention may have a decreased total amount of the carboxyl group of (A) and (C) as compared to that in the resin composition because of the reaction of the polyamide (A) and/or the aromatic polycarboxylic acid (C) with the polyalcohol (B). In the molded article of the present invention, the total amount of the carboxyl group of (A) and (C) is 65 to 500 mmol, preferably 65 to 300 mmol, and more preferably 70 to 300 mmol, per 1 kg in total of (A), (B), and (C). If the total amount of the carboxyl group of (A) and (C) is less than 65 mmol per 1 kg in total of (A), (B), and (C), the effect of suppressing the thermal aging of the molded article is not exhibited, and if it is more than 500 mmol, the molded article may have insufficient mechanical properties due to bleeding-out of the polycarboxylic acid on the surface.

In the polyamide resin composition of the present invention, which has the previously described constitution, the thermal aging is highly suppressed in an atmosphere at a temperature about 180 to 200°C. The polyamide resin composition of the present invention preferably has a retention of tensile strength at 180°C after 1000 hours of 90% or more and a retention of tensile strength at 200°C after 1000 hours of 90% or more, both in the air atmosphere.

Furthermore, the polyamide resin composition of the present invention preferably include a fibrous reinforcing material (D). Examples of the fibrous reinforcing material (D) include, but not particularly limited to, a glass fiber, a carbon fiber, a boron fiber, a polyvinyl alcohol fiber, a polyester fiber, an acrylic fiber, a wholly aromatic polyamide fiber, a polybenzoxazole fiber, a polytetrafluoroethylene fiber, a kenaf fiber, a bamboo fiber, a hemp fiber, a bagasse fiber, a high-strength polyethylene fiber, an alumina fiber, a silicon carbide fiber, a potassium titanate fiber, a brass fiber, a stainless steel fiber, a steel fiber, a ceramic fiber, and a basalt fiber. Among these, the glass fiber and a carbon fiber are preferable as the fibrous reinforcing material (D) in view the effect of highly improving the mechanical properties, heat resistance sufficient to withstand melt-kneading with the polyamide (A), which preferably has a melting point of 270°C or more, and also availability. These fibers as the fibrous reinforcing material (D) may be used singly or in combinations of two or more thereof.

The fibrous reinforcing material (D), such as the glass fiber and a carbon fiber, is preferably treated with a surface treatment agent, such as a sizing agent. The main component of the sizing agent is preferably a coupling agent or a film-forming agent.

Examples of the coupling agent include a vinylsilane coupling agent, an acrylicsilane coupling agent, an epoxysilane coupling agent, an aminosilane coupling agent, and an aminotitanium coupling agent. Among these, the aminosilane coupling agent is preferred in view of the high cohesive effect on the polyamide (A) and the glass fiber or the carbon fiber and also high heat resistance.

Examples of the film-forming agent include a urethane resin, an epoxy resin, and an acrylic resin, and among these, the urethane resin is preferred in view of the high cohesive effect on the glass fiber or the carbon fiber and also high heat resistance. The film-forming agent preferably contains an acid component in view of improvement in the resistance to hydrolysis of the resin composition. The acid component is preferably copolymerized to the resin as the main component of the film-forming agent. Examples of the acid component include an unsaturated monocarboxylic acids such as acrylic acid, methacrylic acid, and cinnamic acid; an unsaturated dicarboxylic acids such as maleic acid, fumaric acid, and itaconic acid; and maleic anhydride.

The fiber length and the fiber diameter of the fibrous reinforcing material (D) are not particularly limited. The fiber length is preferably 0.1 to 7 mm, and more preferably 0.5 to 6 mm. When the fibrous reinforcing material (D) has a fiber length of 0.1 to 7 mm, the fibrous reinforcing material (D) can reinforce the resin composition without any negative effect on the moldability. The fiber diameter of the fibrous reinforcing material (D) is preferably 3 to 20 µm, and more preferably 5 to 14 µm. When the fibrous reinforcing material (D) has a fiber diameter of 3 to 20 µm, the fibrous reinforcing material (D) can reinforce the resin composition without break and damage in melt-kneading. Examples of the shape of the fibrous reinforcing material (D) in the cross section include a circle, a rectangle, an ellipse, and other irregular cross sections, and a circle is preferable among them.

In the case where the polyamide resin composition includes the fibrous reinforcing material (D), the content thereof is preferably 5 to 200 parts by mass, more preferably 10 to 180 parts by mass, even more preferably 20 to 150 parts by mass, and particularly preferably 30 to 130 parts by mass, per 100 parts by mass of the polyamide (A). If the content of the fibrous reinforcing material (D) is less than 5 parts by mass, the improving effect on the mechanical properties of the resin composition may be small. On the other hand, if the content of the fibrous reinforcing material (D) is more than 200 parts by mass, the improving effect on the mechanical properties of the resin composition is saturated so that any more improving effect is not expected to be exhibited, and in addition, the handling properties of the resin composition in melt-kneading may be impaired to result in difficulties with obtaining pellets. Furthermore, if the content of the fibrous reinforcing material (D) is more than 200 parts by mass, the flowability in melt processing is considerably impaired so that the resin temperature may increase due to heat generation by shearing or so that the resin temperature may need increasing in order to improve the flowability. As a result, these may cause the decrease in the molecular weight, or poor mechanical properties or poor resistance to thermal aging.

The polyamide resin composition of the present invention may further include an additive, such as another filler, a colorant, or an antistatic agent, if necessary. Examples of the filler include swellable clay mineral, silica, alumina, glass beads, and graphite. Examples of the colorant include a pigment such as titanium oxide and carbon black, and a dye such as nigrosin. Particularly, when nigrosin is included, the polyamide resin composition has improved flowability in melt processing to lead to a reduced temperature in melt processing and improved resistance to thermal aging, and also a molded article to be obtained has an improved appearance of the surface.

In the present invention, there is no particular limitation on the method for producing the polyamide resin composition of the present invention from the polyamide (A), polyalcohol (B), the aromatic polycarboxylic acid (C), and the fibrous reinforcing material (D) and other additives optionally added, but the polyamide resin composition is preferably produced by the melt-kneading method.

Examples of the melt-kneading method include methods involving the use of a batch type kneader such as Brabender, a Banbury mixer, a Henschel mixer, a helical rotor, rolls, a single-screw extruder, or a twin-screw extruder. The melt-kneading temperature is not particularly limited as long as the polyamide (A) is melted but not decomposed. However, when it is too high, the polyamide (A) is decomposed, and accordingly, the melt-kneading temperature is preferably "the melting point of the polyamide - 20°C" or more and "the melting point of the polyamide + 40°C" or less.

The resin composition melted can be processed into various forms by a method including extruding into strands and making them into the form of pellets, a method including hot cutting or underwater cutting to make into the form of pellets, a method including extruding into the form of a sheet and cutting it, or a method including extruding into the form of a block and pulverizing it to a powder form.

The molded article of the present invention is produced by molding the polyamide resin composition of the present invention and has a total amount of a carboxyl group of (A) and (C) of 65 to 500 mmol per 1 kg in total of (A), (B), and (C).

Examples of the molding method include injection molding, extrusion molding, blow molding, and sintering molding, and injection molding is preferred in view of the effect of highly improving the mechanical properties and moldability.

Examples of the injection molding machine include, but not particularly limited to, an in-line screw type injection molding machine and a plunger-type injection molding machine. The polyamide resin composition heated and melted in the cylinder of the injection molding machine is weighed for every shot, injected in the melted state into a mold, cooled and solidified in a predetermined shape, and then removed as a molded article from the mold. The temperature of the resin in injection molding is more preferably "the melting point of the polyamide - 20°C" or more and less than "the melting point of the polyamide + 40°C." The resin composition of the present invention is excellent in flowability in melt processing, and accordingly, it is not needed to increase the temperature of the resin during molding more than necessary. Thus, the temperature of the resin in molding can be decreased to reduce thermal degradation in melt processing.

In melt processing of the polyamide resin composition, it is preferable to use sufficiently dried pellets of the polyamide resin composition. If pellets of the polyamide resin composition containing a larger amount of moisture are used, the resin may foam in the cylinder of the injection molding machine, and it may thus be difficulty to obtain a most favorable molded article. The moisture content of the pellets of the polyamide resin composition used for injection molding is preferably less than 0.3 parts by mass, and more preferably less than 0.1 parts by mass, per 100 parts by mass of the polyamide resin composition.

The polyamide resin composition of the present invention can be used as a resin for making molded articles in a variety of applications including automobile parts, electrical and electronic parts, miscellaneous goods, industrial equipment parts, and civil engineering and construction components.

Examples of the automobile parts include a member of a thermostat, a member of an IGBT module of an inverter, an insulator, a motor insulator, exhaust finisher, a housing of a power device, a housing of ECU, a member of a motor, a member of a coil, covering material of a cable, a housing of an in-vehicle camera, a lens holder of an in-vehicle camera, in-vehicle connector, an engine mount, an intercooler, bearing retainer, an oil-sealing ring, a chain cover, a ball joint, a chain tensioner, a starter gear, a reducer gear, a tray for an in-vehicle lithium-ion battery, a housing of an in-vehicle high-voltage fuse, and an impeller of an automobile turbocharger.

Examples of the electrical and electronic parts include a connector, an ECU connector, a mate and lock connector, a modular jack, a reflector, an LED reflector, a switch, a sensor, a socket, a pin socket, a capacitor, a jack, a fuse holder, a relay, a coil bobbin, a breaker, a circuit part, an electromagnetic switch, a holder, a cover, a plug, housing parts for electrical and electronic devices such as a portable personal computer and a word processor, an impeller, an impeller of a vacuum cleaner, a resistor, a variable resistor, an IC, a housing of LED, a housing of a camera, a lens barrel of a camera, a holder of a camera lens, a tact switch, a tact switch of lighting, a housing of a hair iron, a comb of a hair iron, a wholly molded small switch for DC only, a switch of an organic EL display, a material for a 3D printer, and a material for bond magnet for a motor.

Examples of the miscellaneous goods include a tray, a sheet, and a tying band.

Examples of the industrial equipment parts include insulators, connectors, gears, switches, a sensor, an impeller, and a plarail chain.

Examples of the civil engineering and construction components include a fence, a storage box, a switchboard for construction work, a guide for an anchor bolt, a rivet for an anchor, and a raising material for a solar panel.

The polyamide resin composition of the present invention, of which thermal aging is highly suppressed in an atmosphere at a temperature of about 180 to 200°C, can be suitably used particularly for molded articles as the automobile parts which are used in a high temperature environment for a long time.

### [Examples]

The present invention will now be specifically illustrated by way of , Examples.

### 1. Methods for Determination

The physical properties of a polyamide (A) and a polyamide resin composition were determined by the following methods.

### (1) Melting Point

A differential scanning calorimeter DSC-7 (manufactured by PerkinElmer, Inc.) was used. In a nitrogen atmosphere, a sample was heated to 360°C at a rate of temperature increase of 20°C/min, kept at 360°C for 5 minutes, cooled to 25°C at a rate of temperature decrease of 20°C/min, and further kept at 25°C for 5 minutes. Then, the sample was again heated at a rate of temperature increase of 20°C/min to determine the endothermic peak, and the temperature at the top of the endothermic peak was used as the melting point.

### (2) Amount of Carboxyl Group

The amount of the carboxyl group in the polyamide (A), and the total amount of the carboxyl group of (A) and (C) per 1 kg in total of (A), (B), and (C) in pellets of the polyamide resin composition and that in a molded article were determined by ¹H-NMR measurement (solvent: deuterated trifluoroacetic acid, temperature: 25°C). Specimen 1, which was prepared by the method described in (3) below, was used as the molded article.

### (3) Tensile Strength, Resistance to Thermal Aging (Retention of Tensile Strength)

The tensile strengths were determined in accordance with ISO 178 on specimens 1 to 3, which were prepared by the following methods. The retention (%) of the tensile strength of specimen 2 and that of specimen 3 relative to that of specimen 1 were each determined to evaluate the resistance to thermal aging at 180°C and 200°C.

### <Specimen 1>

The polyamide resin composition was injection molded using an injection molding machine S2000i-100B (manufactured by FANUC CORPORATION) under the conditions of a cylinder temperature of (the melting point of the polyamide + 15°C), a mold temperature of (the melting point of the polyamide - 175°C), and a residence time in the cylinder of 10 seconds, to thereby prepare specimen 1 (ISO multipurpose specimen)

### <Specimen 2> (Specimen for Evaluating Thermal Aging, Heat Treatment at 180°C for 1000 hours)

Specimen 1 was heat treated at 180°C for 1000 hours in an air-heating furnace in an air atmosphere to prepare specimen 2.

### <Specimen 3> (Specimen for Evaluating Thermal Aging, Heat Treatment at 200°C for 1000 hours)

Specimen 1 was heat treated at 200°C for 1000 hours in an air-heating furnace in an air atmosphere to prepare specimen 3.

### 2. Materials

The materials used in Examples and Comparative Examples were shown below.

### (1) Polyamide (A)

### - Production of Polyamide (A-1)

4.89 kg of powdery terephthalic acid (TPA) as an aromatic dicarboxylic acid component and 9.3 g of sodium hypophosphite monohydrate as a polymerization catalyst were placed in a reactor of ribbon blender type, and heated to 170°C in nitrogen in the reactor hermetically closed while stirring at a number of rotations of 30 rpm. Then, while the temperature and the number of rotations were kept at 170°C and 30 rpm, respectively, 4.98 kg of 1,10-decane diamine (DDA) heated at 100°C as an aliphatic diamine component was continuously added (by continuous liquid injection mode) using an injector over 2.5 hours to obtain a reaction product. The molar ratio of the starting monomers was TPA:DDA=50.5:49.5.

Then, the obtained reaction product was heated at 250°C at a number of rotations of 30 rpm for 8 hours under a nitrogen gas flow in the same reactor to cause polymerization, to thereby prepare a polyamide powder.

Thereafter, the obtained polyamide powder was made into strands using a twin screw kneader, and the strands were allowed to pass through a water bath to be cooled and solidified. The resultant was cut using a pelletizer to obtain pellets of polyamide (A-1).

### - Production of Polyamides (A-2) to (A-4)

Polyamides (A-2) to (A-4) were each obtained in the same manner as for polyamides (A-1) except that the formulation of the resin was changed as shown in Table 1. For polyamide (A-4), stearic acid as a monocarboxylic acid was placed together with terephthalic acid and sodium hypophosphite monohydrate in the reactor of ribbon blender type.

### - Production of Polyamide (A-5)

The salt between 1,4-butane diamine and adipic acid was subjected to polymerization at 220°C for 4 hours in an autoclave to prepare a prepolymer. Then, the prepared prepolymer was further subjected to polymerization at 250°C at a pressure of 1 bar for 4 hours to thereby obtain a reaction product. The process after that was carried out in the same manner as for polyamide (A-1) to obtain pellets of polyamide (A-5).

The formulation of the resin and the characteristic values of the obtained polyamides are shown in Table 1.

**[Table 1]**

| | Formulation of Polyamide (A) | | | | | | | Characteristic Values | |
|---|---|---|---|---|---|---|---|---|---|
| | Dicarboxylic Acid Component | | Diamine Component | | Monocarboxylic Acid Component | | Amount of Carboxyl Group | Melting Point | Relative Viscosity |
| | Kind | mol% | Kind | mol% | Kind | mol% | mmol/kg | °C | |
| A-1 | Terephthalic Acid | 50.5 | 1,10-Decanediamine | 49.5 | - | 0.0 | 100 | 317 | 2.58 |
| A-2 | | 50.9 | | 49.1 | | | 130 | 317 | 2.55 |
| A-3 | | 50.3 | | 49.7 | | | 80 | 317 | 2.60 |
| A-4 | | 48.5 | | 49.6 | Stearic Acid | 1.9 | 40 | 317 | 2.25 |
| A-5 | Adipic Acid | 50.0 | 1,4-Butanediamine | 50.0 | - | 0.0 | 35 | 290 | 3.35 |

- Polyamide (A-6): Polyamide 6 (manufactured by UNITIKA LTD., A1030BRF-BA, amount of carboxyl group 47 mmol/kg, melting point 220°C, relative viscosity 3.10)
- Polyamide (A-7): Polyamide 66 (manufactured by Asahi Kasei Corporation, Leona 1200, amount of carboxyl group 120 mmol/kg, melting point 265°C, relative viscosity 2.45)

### (2) Polyalcohol (B)

- B-1: dipentaerythritol (manufactured by Tokyo Chemical Industry Co., Ltd.)
- B-2: ester between dipentaerythritol and adipic acid (manufactured by Ajinomoto Fine-Techno Co., Inc., PLENLIZER ST-210)
- B-3: pentaerythritol (manufactured by Tokyo Chemical Industry Co., Ltd.)

### (3) Aromatic Polycarboxylic Acid (C)

- C-1: 1,3,5-benzenetricarboxylic acid (manufactured by Tokyo Chemical Industry Co., Ltd., molecular weight 210.14, amount of carboxyl group 14276 mmol/kg)
- C-2: 1,3,5-tris(carboxymethyl)benzene (manufactured by Sigma-Aldrich, molecular weight 252.22, amount of carboxyl group 11894 mmol/kg)
- C-3: 1,3,5-tris (4-carboxyphenyl) benzene (manufactured by FUJIFILM Wako Pure Chemical Corporation, molecular weight 438.43, amount of carboxyl group 12582 mmol/kg)

### (4) Fibrous reinforcing material (D)

- D-1: glass fiber (manufactured by Nippon Electric Glass Co., Ltd., T-262H, average fiber diameter 10.5 µm, average fiber length 3 mm, a film-forming agent containing an acid copolymer was used therefor)
- D-2: carbon fiber (manufactured by Toho Tenax Co., Ltd., HTA-C6-NR, average fiber diameter 7 µm, average fiber length 6 mm)

### Example 1

100 parts by mass of polyamide (A-1) and 3.0 parts by mass of polyalcohol (B-1) were dry-blended. The blend was weighed using a loss-in-weight feeder CE-W-1 (manufactured by Kubota Corporation.) and feed to a co-rotating twin-screw extruder TEM26SS (manufactured by TOSHIBA MACHINE CO., LTD.), which had a screw diameter of 26 mm and a L/D of 50, through its main feed opening, and melt kneading was performed. 45 parts by mass of fibrous reinforcing material (D-1) was halfway fed from the side feeder, and kneading was further performed. The kneaded product was drawn into strands from a die, which was then allowed to pass through a water bath to be cooled and solidified. The resultant was cut with a pelletizer to obtain pellets of a polyamide resin composition. The barrel temperature of the extruder was set to the range of "the melting point of the polyamide + 5°C" to "the melting point of the polyamide + 15°C", the number of rotations of the screw was 250 rpm, and the discharge rate was 25 kg/h.

### Example 3

Pellets of a polyamide resin composition were obtained in the same manner as in Example 1, except that 100 parts by mass of polyamide (A-1), 5.0 parts by mass of polyalcohol (B-1), and 1.5 parts by mass of aromatic polycarboxylic acid (C-1) were dry-blended.

### Examples 2, 4 to 26, Examples 27 to 31 not forming part of the present invention, and Comparative Examples 1 to 9

Pellets of a polyamide resin composition were obtained in the same manner as in Example 1 or 3, except that the formulation of the polyamide resin composition was changed as shown in Tables 2 and 3.

Various evaluation tests were made on the obtained pellets of a polyamide resin composition. The results are shown in Table 2 and 3.

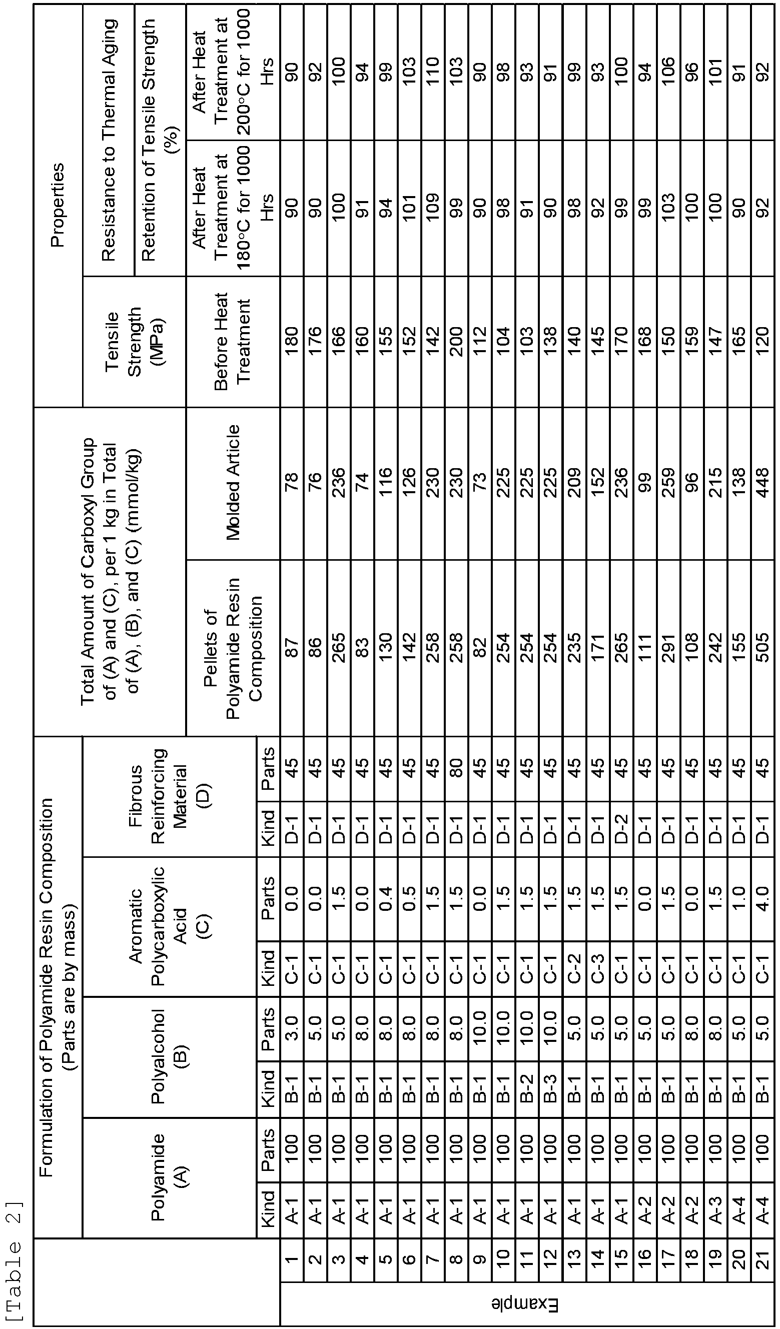

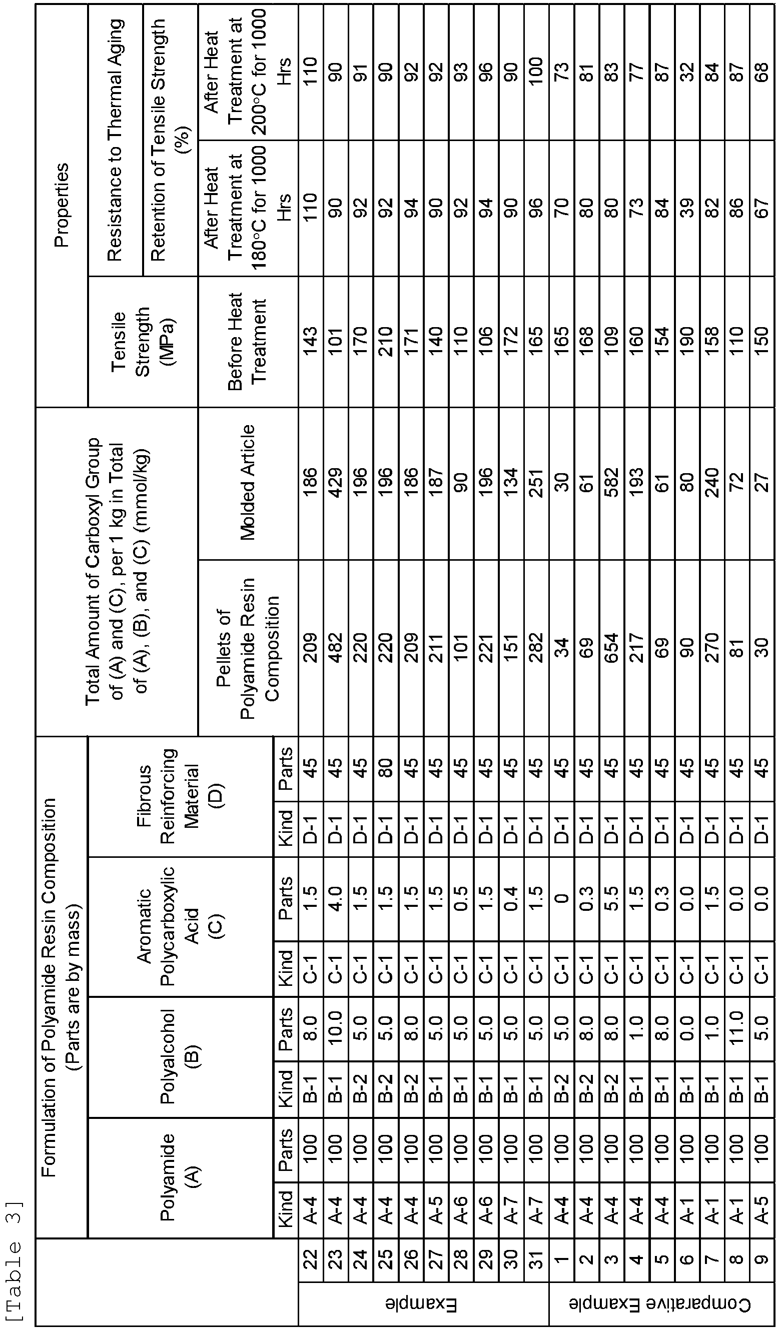

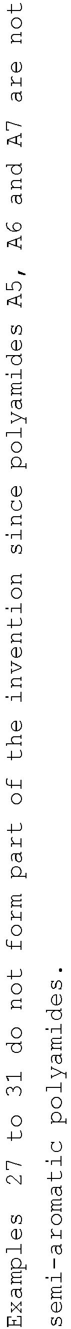

In the resin compositions of Examples 1 to 26, which satisfy the requirements of the present invention, and Examples 27 to 31, which do not satisfy the requirements of the present invention, thermal aging was highly suppressed in an atmosphere at a temperature of 180°C and that of 200°C, and the retentions of the tensile strength after 1000 hours in respective atmospheres were thus 90% or more.

In Examples 2 to 3, 4 to 7, 9 to 10, 16 to 17, 20 to 21, 28 to 29, and 30 to 31, the improvement in the resistance to thermal aging of the resin composition was shown, as the total amount of the carboxyl group of the polyamide (A) and the aromatic polycarboxylic acid (C) was larger. As the content of the aromatic polycarboxylic acid (C) is higher, the tensile strength decreased.

The resin composition of Comparative Examples 1, 2, 5 and 9 had a small total amount of the carboxy group of (A) and (C), and the resin composition of Comparative Example 3 had a large total amount of the carboxy group of (A) and (C). Accordingly, these resin compositions all had a small retention of tensile strength, and thus had poor resistance to thermal aging.

The resin composition of Comparative Examples 4, 6, and 7 had a small content of the polyalcohol (B), and the resin composition of Comparative Example 8 had a large content of the polyalcohol (B). Accordingly, these resin compositions all had a small retention of tensile strength, and thus had poor resistance to thermal aging.

## Claims

1. A polyamide resin composition comprising 100 parts by mass of a semi-aromatic polyamide (A), 3.0 to 10.0 parts by mass of a polyalcohol (B), and more than 0.0 parts by mass and 4.0 parts by mass or less of an aromatic polycarboxylic acid (C), wherein
a total amount of a carboxyl group of (A) and (C) is 80 to 600 mmol per 1 kg in total of (A), (B), and (C) and
the aromatic polycarboxylic acid (C) is an aromatic tricarboxylic acid represented by general formula (1): 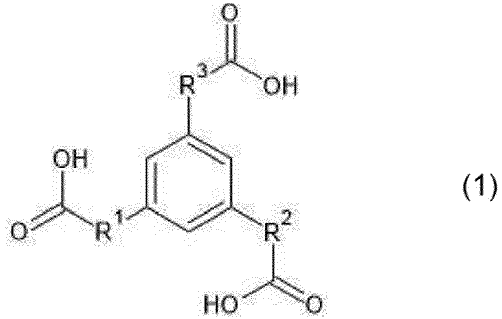
wherein R¹, R², and R³ each independently represent a single bond or a divalent group selected from a methylene group, an ethylene group, a propylene group, a butylene group, a cyclohexylene group, and a phenylene group.

2. The polyamide resin composition according to claim 1, wherein a content of the aromatic polycarboxylic acid (C) is 0.4 parts by mass or more per 100 parts by mass of the semi-aromatic polyamide (A).

3. The polyamide resin composition according to claim 1 or 2, wherein the semi-aromatic polyamide (A) has a melting point of 270 to 350°C when determined by the method indicated in the description.

4. The polyamide resin composition according to any one of claims 1 to 3, wherein the polyalcohol (B) is dipentaerythritol or a derivative thereof.

5. The polyamide resin composition according to any one of claims 1 to 4, wherein the aromatic polycarboxylic acid (C) is 1,3,5-benzenetricarboxylic acid.

6. The polyamide resin composition according to any one of claims 1 to 5, wherein the polyamide resin composition has a retention of tensile strength at 180°C after 1000 hours of 90% or more and a retention of tensile strength at 200°C after 1000 hours of 90% or more, both in an air atmosphere.

7. The polyamide resin composition according to any one of claims 1 to 6, wherein the polyamide resin composition further comprises 5 to 200 parts by mass of a fibrous reinforcing material (D).

8. The polyamide resin composition according to claim 7, wherein the fibrous reinforcing material (D) is a glass fiber and/or a carbon fiber.

9. A molded article obtained by molding the polyamide resin composition according to claim 1, wherein a total amount of a carboxyl group of (A) and (C) is 65 to 500 mmol per 1 kg in total of (A), (B), and (C).

## Patentansprüche

1. Polyamidharzzusammensetzung, umfassend 100 Massenteile eines halbaromatischen Polyamids (A), 3,0 bis 10,0 Massenteile eines Polyalkohols (B) und mehr als 0,0 Massenteile und 4,0 Massenteile oder weniger einer aromatischen Polycarbonsäure (C), wobei
eine Gesamtmenge einer Carboxylgruppe von (A) und (C) 80 bis 600 mmol pro 1 kg von (A), (B) und (C) insgesamt beträgt und
die aromatische Polycarbonsäure (C) eine aromatische Tricarbonsäure ist, die durch die allgemeine Formel (1) dargestellt ist: 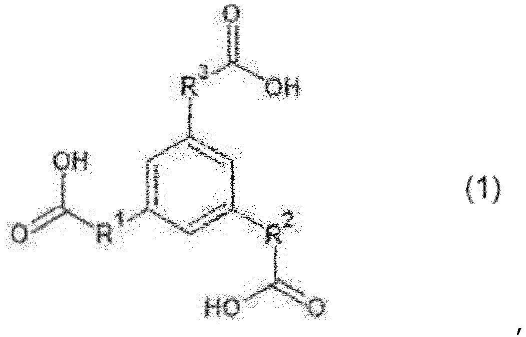
wobei R¹, R² und R³ jeweils unabhängig eine Einfachbindung oder eine zweiwertige Gruppe, die aus einer Methylengruppe, einer Ethylengruppe, einer Propylengruppe, einer Butylengruppe, einer Cyclohexylengruppe und einer Phenylengruppe ausgewählt ist, bilden.

2. Polyamidharzzusammensetzung nach Anspruch 1, wobei ein Gehalt der aromatischen Polycarbonsäure (C) 0,4 Massenteile oder mehr pro 100 Massenteile des halbaromatischen Polyamids (A) beträgt.

3. Polyamidharzzusammensetzung nach Anspruch 1 oder 2, wobei das halbaromatische Polyamid (A) einen Schmelzpunkt von 270 bis 350°C bei Bestimmung durch das in der Beschreibung angegebene Verfahren aufweist.

4. Polyamidharzzusammensetzung nach einem der Ansprüche 1 bis 3, wobei der Polyalkohol (B) Dipentaerythrit oder ein Derivat davon ist.

5. Polyamidharzzusammensetzung nach einem der Ansprüche 1 bis 4, wobei die aromatische Polycarbonsäure (C) 1,3,5-Benzoltricarbonsäure ist.

6. Polyamidharzzusammensetzung nach einem der Ansprüche 1 bis 5, wobei die Polyamidharzzusammensetzung eine Aufrechterhaltung der Zugfestigkeit bei 180°C nach 1000 Stunden von 90% oder mehr und eine Aufrechterhaltung der Zugfestigkeit bei 200°C nach 1000 Stunden von 90% oder mehr, beide in einer Luftatmosphäre, aufweist.

7. Polyamidharzzusammensetzung nach einem der Ansprüche 1 bis 6, wobei die Polyamidharzzusammensetzung ferner 5 bis 200 Massenteile eines faserhaltigen Verstärkungsmaterials (D) umfasst.

8. Polyamidharzzusammensetzung nach Anspruch 7, wobei das faserhaltige Verstärkungsmaterial (D) eine Glasfaser und/oder eine Kohlefaser ist.

9. Formteil, das durch Formen der Polyamidharzzusammensetzung nach Anspruch 1 erhalten wird, wobei eine Gesamtmenge einer Carboxylgruppe von (A) und (C) 65 bis 500 mmol pro 1 kg von (A), (B) und (C) insgesamt beträgt.

## Revendications

1. Composition de résine de polyamide comprenant 100 parties en masse d'un polyamide semi-aromatique (A), 3,0 à 10,0 parties en masse d'un polyol (B), et plus de 0,0 partie en masse et 4,0 parties en masse ou moins d'un acide polycarboxylique aromatique (C), dans laquelle
la quantité totale des groupes carboxyle de (A) et (C) est de 80 à 600 mmol par kg au total de (A), (B) et (C) et
l'acide polycarboxylique aromatique (C) est un acide tricarboxylique aromatique représenté par la formule générale (1) : 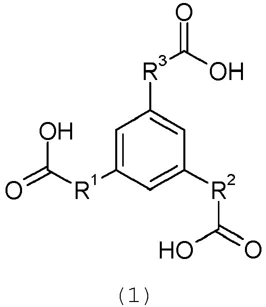
dans laquelle chacun de R¹, R² et R³ représente indépendamment une liaison simple ou un groupe divalent choisi parmi un groupe méthylène, un groupe éthylène, un groupe propylène, un groupe butylène, un groupe cyclohexylène, et un groupe phénylène.

2. Composition de résine de polyamide selon la revendication 1, dans laquelle la teneur en l'acide polycarboxylique aromatique (C) est de 0,4 partie en masse ou plus pour 100 parties en masse du polyamide semi-aromatique (A).

3. Composition de résine de polyamide selon la revendication 1 ou 2, dans laquelle le polyamide semi-aromatique (A) a un point de fusion de 270 à 350°C quand il est déterminé par le procédé indiqué dans la description.

4. Composition de résine de polyamide selon l'une quelconque des revendications 1 à 3, dans laquelle le polyol (B) est le dipentaérythritol ou un dérivé de celui-ci.

5. Composition de résine de polyamide selon l'une quelconque des revendications 1 à 4, dans laquelle l'acide polycarboxylique aromatique (C) est l'acide 1,3,5-benzènetricarboxylique.

6. Composition de résine de polyamide selon l'une quelconque des revendications 1 à 5, laquelle composition de résine de polyamide a un maintien de la résistance à la traction à 180°C après 1000 heures de 90 % ou plus et un maintien de la résistance à la traction à 200°C après 1000 heures de 90 % ou plus, les deux dans une atmosphère d'air.

7. Composition de résine de polyamide selon l'une quelconque des revendications 1 à 6, laquelle composition de résine de polyamide comprend en outre 5 à 200 parties en masse d'un matériau de renforcement fibreux (D).

8. Composition de résine de polyamide selon la revendication 7, dans laquelle le matériau de renforcement fibreux (D) est une fibre de verre et/ou une fibre de carbone.

9. Article moulé obtenu par moulage de la composition de résine de polyamide selon la revendication 1, dans lequel la quantité totale des groupes carboxyle de (A) et (C) est de 65 à 500 mmol par kg au total de (A), (B) et (C).
